# EUROPEAN PATENT SPECIFICATION

(11) **EP 0 964 229 B1**
(45) Date of publication and mention of the grant of the patent: **30.06.2010**
(21) Application number: 99111115.4
(22) Date of filing: 08.06.1999
(51) Int. Cl.: G01F 23/60, G01F 23/00

(54) **A fuel-level indicator for a vehicle tank**
Kraftstoffniveaumesser für einen Fahrzeugtank
Indicateur de niveau de carburant pour un réservoir de véhicule

(30) Priority: 09.06.1998 IT TO980504
(43) Date of publication of application: 15.12.1999
(73) Proprietor: BITRON S.p.A., 10122 Torino (IT)
(72) Inventor: Burnengo, Paolo, 17024 Orco Feglino (Savona) (IT); Magini, Libero, 17012 Albissola Marina (Savona) (IT); Coletti, Delio, 17100 Savona (IT)
(74) Representative: Quinterno, Giuseppe

(56) References cited:
- DE-A- 3 619 296
- DE-C- 844 353
- FR-A- 557 306
- FR-A- 591 876
- US-A- 2 887 880
- US-A- 4 920 797

## Description

The present invention relates to a fuel-level indicator for a vehicle tank, particularly for a motor vehicle, of the kind defined in the preamble of claim 1. US-A-4 290 797 discloses a level indicator of this kind wherein the position of the float is detected by means of a magnet and a Hall effect sensor.

Further liquid level indicators are disclosed in FR-A-591 876 and US-A-2 887 880.

An object of the invention is to provide a fuel-level indicator which is easy and inexpensive to manufacture.

This and other objects are achieved, according to the invention, by a fuel-level indicator the main characteristics of which are defined in appended Claim 1.

Further characteristics and advantages of the invention will become clear from the following detailed description, given purely by way of non-limiting example with reference to the appended drawings, in which:
Figure 1 is a sectioned view of a fuel-level indicator according to the invention,
Figure 2 is a partially-sectioned view of a variant of the fuel-level indicator,
Figures 3 to 5 are partially-sectioned views of further variants of embodiment,
Figure 6 is a perspective view which shows some details of the embodiment of Figure 5,
Figure 7 is a partial perspective view of another variant of embodiment,
Figure 8 is an exploded, perspective view of two details of the variant of Figure 7,
Figure 8a is a partial axially-sectioned view of a further variant of embodiment,
Figures 9 and 10 are perspective views which show a first embodiment of a resistive sensor included in a level indicator according to the invention,
Figure 11 is a partially-sectioned view of a variant of embodiment, and
Figures 12 and 13 are perspective views of a further embodiment of a resistive sensor for a level indicator according to the invention.

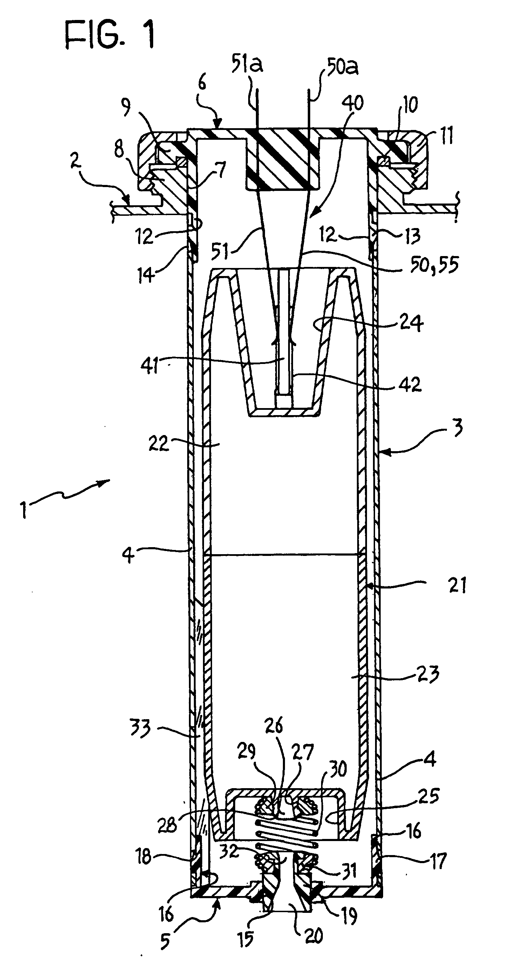

In Figure 1, an electric indicator for indicating the fuel level in a vehicle tank 2 is generally indicated 1. The level indicator 1 comprises an elongate, cylindrical container 3 for mounting in the tank 2. The container 3 has a length substantially corresponding to the height or depth of the tank and comprises an open-ended, tubular element 4, and a base 5 and an upper closure element 6 coupled to the lower end and to the upper end of the tubular element, respectively.

In the embodiment shown by way of example, the upper wall of the tank 2 has an opening 7 for the insertion of the level indicator 1. In the vicinity of this opening, the wall of the tank 2 forms an externally threaded union 8. The closure element 6 is shaped substantially as an inverted cup and has an outer annular flange 9. In the face of this flange which faces the union 8 there is a seat which partially houses a sealing ring 10.

The level indicator 1 is fixed to the tank 2 by means of a threaded ring 11 which bears on the flange 9 of the upper closure element 6 and which is coupled with the thread of the union 8 of the tank.

The upper closure element 6 has at least two lower, integral, flexible appendages 12 each having a respective engagement tooth 13. These appendages 12 extend inside the tubular element 4 and their teeth 13 snap-engage in corresponding holes or seats 14 formed in the wall of the tubular element.

The closure element 6 is advantageously made of moulded plastics material.

The base 5 has a central opening 15 which, in the embodiment according to Figure 1, is threaded. This base has at least one pair of upwardly-facing, flexible, integral appendages 16 having respective external engagement teeth 17 snap-engaged in corresponding holes or seats 18 provided in the lower end portion of the tubular element 4.

An annular restraining and calibration member 19 is mounted in an axially adjustable position in the hole 15 in the base 5, forming an axial duct 20 through which the interior of the container 3 is put operatively into fluid communication with the interior of the tank 2.

Alternatively, the member 19 may be solid and (at least) one through-hole may be formed in the base 5.

An elongate float 21 is mounted so as to be movable vertically inside the container 3 of the level indicator.

In the embodiment shown by way of example, the float 21 is a hollow body formed by two half-shells 22 and 23 coupled with one another in a liquid-tight manner.

The upper and lower ends of the float 21 form respective recesses, indicated 24 and 25 in Figure 1. A hook element 26 extends downwards from the end wall of the lower recess 25 and faces towards the restraining and calibration member 19. The element 26 has a neck 27 below which there is a head 28. A substantially frustoconical ring 29, snap-engaged around the neck 27 of the element 26, acts as an upper anchorage for a helical spring 30. The ring 29 preferably extends around the element 26 loosely so as to be rotatable relative thereto.

The lower end of the spring 30 is anchored to the outer surface of a substantially frustoconical ring 31 arranged, preferably loosely, around a tubular restraining element 32 integral with the calibration member 19.

The spring 30, which is interposed between the float 21 and the base 5 of the container 3, tends to keep the float 3 in a predetermined reference position.

The level indicator can be calibrated easily by screwing-up or unscrewing the member 19.

The base 5 is advantageously made of a moulded plastics material. The restraining and calibration member 19 may also be made of moulded plastics material and, after calibration, may be stabilized by welding to the base 5.

The loose arrangement of the rings 29 and 31 between which the spring 30 is anchored prevents the spring from being subjected to torsional loads as a result of the screwing-up or unscrewing of the member 19 during calibration.

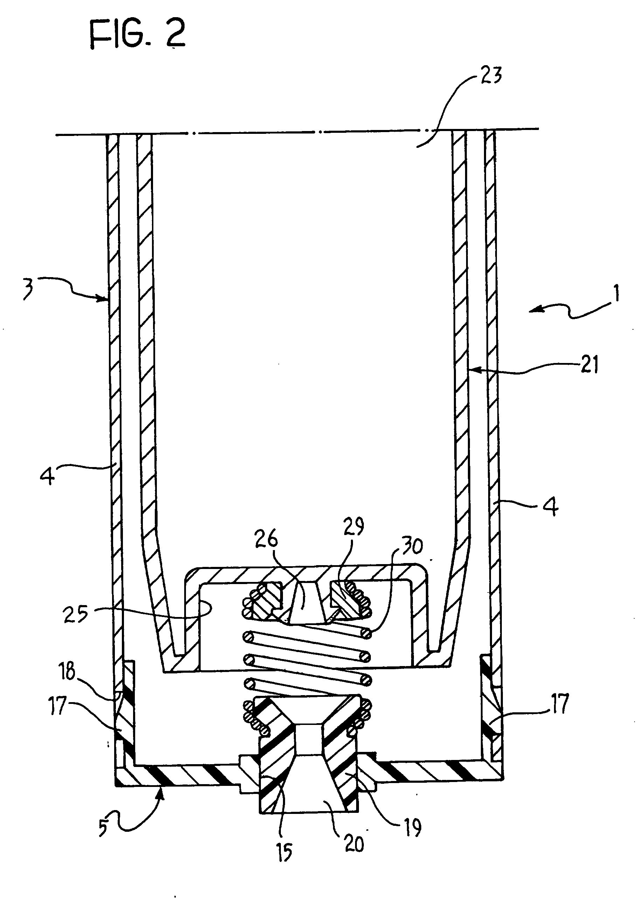

Figure 2 shows a variant in which the central hole 15 in the base 5 is not threaded and the restraining and calibration member 19 is driven into this hole with interference. In this embodiment, calibration can be achieved by bringing about axial movements of the member 19 which, owing to their nature, do not result in torsional stresses on the spring 30. In the variant of Figure 2, the lower end of the spring 30 can therefore be anchored directly to the restraining and calibration member 19 without the interposition of a rotatable ring. The upper end of the spring 30 can be anchored to the element 26 of the float with the interposition of a rotatable ring 29, as shown in Figures 1 and 2, or even directly to the element 26 without the interposition of this ring.

In the embodiment of Figure 2 also, once calibration has been achieved, the position of the member 19 can be stabilized by welding to the base 5.

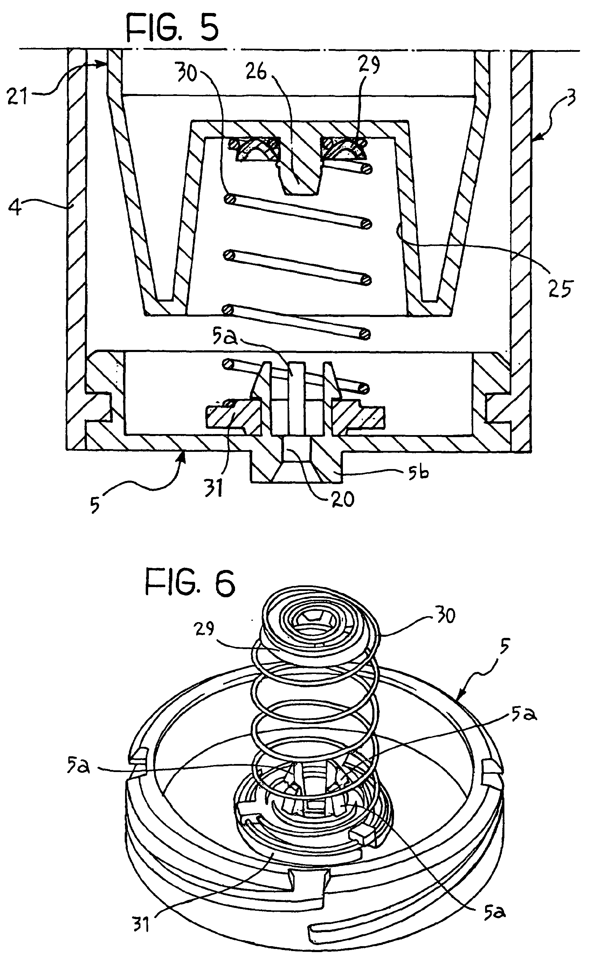

The operative axial movement of the float 21 may be guided, for example, by the engagement of a plurality of appendages 33 (of which one is visible in Figure 1) which may be formed integrally with the base 5 and/or with the tubular element 4, in outer longitudinal grooves of the float. Alternatively, as shown in Figure 5, the guide appendages 33 may also be formed integrally with the upper closure element 6 of the level indicator.

The float body 21 may advantageously be made of moulded plastics material. In this case, in an alternative embodiment, not shown, the upper end of the spring 30 may be anchored to the float 21 during the moulding thereof. According to a further alternative, not shown, the lower end of the spring 30 may be anchored to the restraining and calibration member 19 during the moulding thereof.

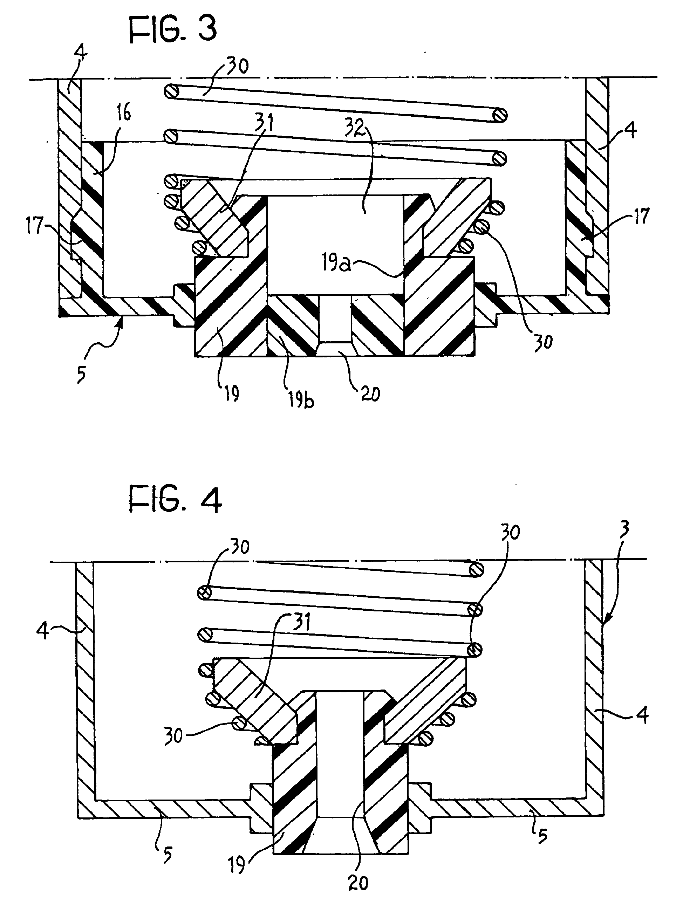

Figure 3 shows a further embodiment in which a restraining and calibration element 19, mounted (in an axially adjustable position) in the base 5, has a wide axial duct 19a in which a plug 19b having a through-hole 20 is fixed.

The plug 19b is fixed in the duct 19a after the calibration of the device which may be performed dry or in the presence of liquid. The wide duct 19a enables the calibration to be performed easily by means of a rod introduced through the duct. The hole 20 in the plug 19b is relatively small and enables the variations of the level adopted by the fuel inside the container 3 of the device to be "damped" in normal operation.

Figure 4 shows a further variant in which the base of the container 3 is formed integrally with the tubular element 4.

Figure 5 and 6 show yet another variant in which the base 5 is connected to the lower end of the tubular element 4 substantially by a threaded or bayonet coupling. The helical spring 30 extends between an upper, annular restraining member 29 snap-fitted on an element 26 of the float 21 and a shaped lower restraining member 31 snap-fitted, preferably rotatably, around a set of resilient appendages 5a which extend from the base 5 towards the float 21 around a central duct 20 formed in the base. The appendages 5a have respective teeth for retaining the restraining member 31. The duct 20 extends through a projecting element 5b which extends from the lower face of the base 5 and which is advantageously shaped (for example, with a polygonal cross-section) in a manner such as to enable the base to be rotated in order to couple it with the tubular element 4 and then to enable the load of the spring 30 to be calibrated. Upon completion of the calibration, the axial position of the base 5 can be stabilized by welding to the tubular element 4.

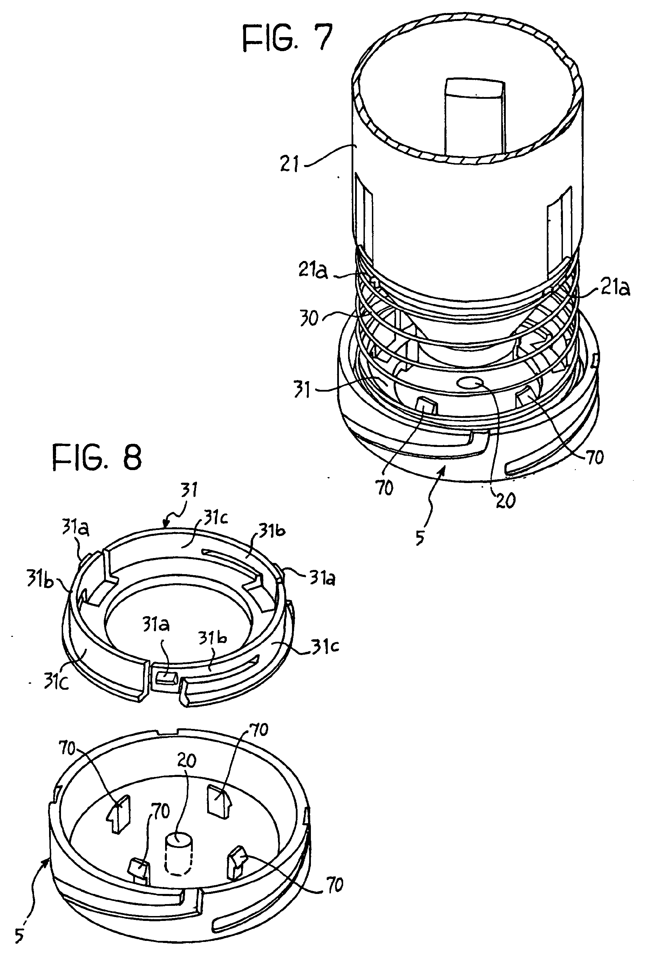

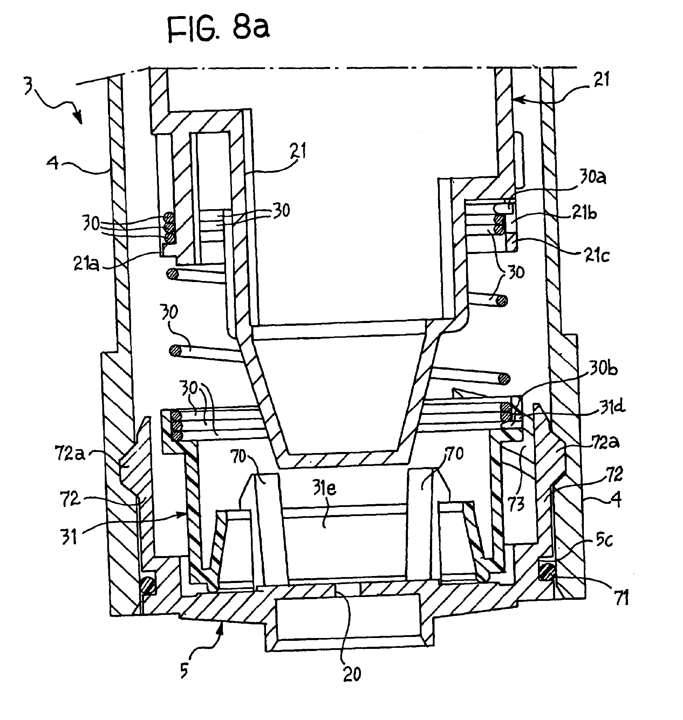

Figures 7 and 8 show a further variant in which the top of the helical spring 30 is engaged on the float in the region of the side wall thereof. The upper end turns of the spring 30 are engaged above radially projecting restraining appendages 21a integral with the float 21. The lower turns of the spring 30, however, are engaged below outer radial projections 31a of an annular element 31 (see in particular Figure 8) coupled to a base 5 to be fixed to the lower end of the tubular element 4 by a bayonet coupling or a threaded coupling substantially as in the variant of Figures 5 and 6. The projections 31a are advantageously formed at the ends of flexible portions 31b of a wall 31c of the annular element 31; the engagement of the lower turns of the spring 30 under the projections 31a is facilitated by the ability of the flexible portions 31b to bend towards the axis.

The annular member 31 can be snap-engaged under restraining teeth of resilient appendages 70 integral with the base 5, in the centre of which a duct 20 is formed.

In the embodiment of Figures 7 and 8, the axial position of the base 5 relative to the tubular element 4 can also be stabilized by welding after calibration.

Figure 8a shows a further variant of embodiment in which the top of the helical spring 30 is engaged on the float 21. Also in this case the upper end turns of the spring 30 are engaged above radially projecting restraining appendages 21a of the float. The uppermost turn of the spring 30 has an end portion 30a bent radially toward the outside and engaged, preferably with circumferential play, in an aperture or window 21b provided in a skirt portion 21c of the float 21.

The lower turns of the spring 30 are contained and rest in the upper portion of an annular member 31 coupled to a base 5 which is sealingly connected to the lower end portion of the tubular member 4. The lowermost turn of the spring 30 has an end portion 30b bent radially toward the outside and engaged in an aperture or window 31d provided in the upper portion of the annular member 31 which has an increased diameter.

The annular member 31 forms a lower internal skirt 31a on whose upper edge there are engaged the restraining teeth of a plurality of resilient appendages 70 integral with the base 5.

The base 5 has a lower wall portion, in which there is provided a central opening or duct 20 and which forms a lateral peripheral groove 5c in which there is disposed a ring seal 71 cooperating with the wall of the tubular member 4. The base 5 is also provided with a further plurality of resilient appendages 72 which extend upwardly, around the annular member 31, and which have respective projections or teeth 72a snap-engaged in respective seats 73 provided in the internal surface of the tubular member 4.

These seats 73, of which only one is visibile in figure 8a, develop essentially as helical segments whereby the base 5, after being snap-engaged into the tubular member 4, can be rotated relative thereto to allow calibration of the load of the spring 30. Once calibration has been achieved, the position of the base 5 may be stabilised, for instance by welding to the tubular member 4.

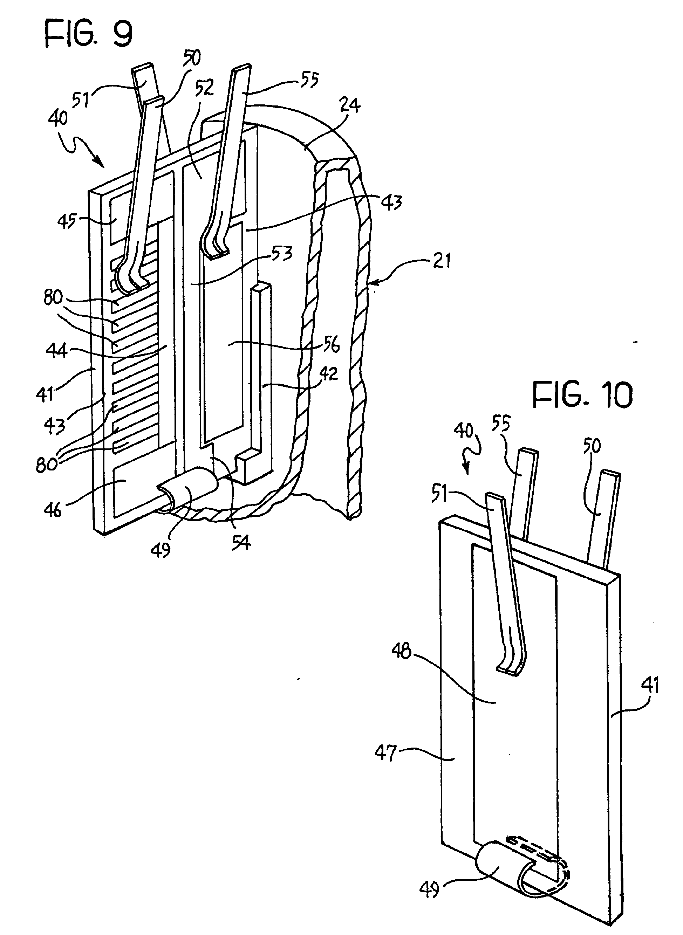

With further reference to the embodiment of Figure 1, in the upper portion of the level indicator 1, there is a position sensor, generally indicated 40, for providing electrical signals indicative of the position of the float 21 relative to the container 3. In the embodiment according to Figures 1, 9 and 10, this sensor comprises a substantially rectangular, plate-like support element 41 of electrically-insulating, advantageously ceramic, material. This support element is fixed in the recess 24 of the float 21, for example, by engagement in restraining elements integral with the float, such as that indicated 42 in Figure 9.

The support element 41 extends in an axial plane of the level indicator and, on a first of its main faces, indicated 43 in Figure 9, carries a first longitudinal track 44 of resistive material formed, for example, by the thick-film technique. This resistive track 44 extends between two conductive areas or pads 45 and 46 advantageously also deposited by the thick-film technique.

A track 48 of conductive material is deposited on the other main face 47 of the support element 41 (Figure 10). This track is also advantageously formed by the thick-film technique.

The resistive track 44 and the conductive track 48 are permanently connected to one another electrically, for example, by means of a U-shaped metal bridge or clip 49 which is arranged around the lower edge or rim of the support element 41 and the arms of which bear resiliently on the lower portion of the conductive track 48 and on the conductive area or pad 46 which acts as the lower terminal of the resistive track 44, respectively.

A plurality of transverse conductive strips 80 extend substantially parallel to one another from a longer side of the resistive track 44 and act as intermediate terminals or contacts between the end areas or terminals 45 and 46.

The lower end of a metal contact element 50, which extends through the upper closure element 6 (Figure 1), can slide on the row of strips 80. The contact member 50 may, for example, be incorporated in the closure element 6 during the moulding thereof and its upper end 50a (Figure 1) advantageously projects above this closure element 6, forming an electrical terminal connectible to a detection circuit (of known type, not shown) by means of an electrical connector, also of known type and not shown.

A further contact member, similar to the element 50 described above, is indicated 51 in Figures 1, 9 and 10 and its lower end presses on the conductive track 48 applied to the face 47 of the support element 41. The contact member 51 also advantageously has an upper end 51a projecting from the closure element 6 for connection to a detection circuit, not shown.

In operation, the axial position of the float 21 relative to the container 3 varies with variations in the fuel level in the tank 2. The position of the support element 41 varies correspondingly and the electrical resistance detectable between the terminals 50a and 51a of the contact members 50 and 51 consequently varies. The variation in resistance can be converted into a visible indication of the instantaneous fuel level, in known manner.

The sensor 40 may be formed in a manner such as to enable the reaching of a predetermined minimum fuel level in the tank to be indicated in order, for example, to switch on an optical indicator in this condition. In the embodiment of Figures 9 and 10, this is achieved by the application, for example, to the face 43 of the support 41, of a conductive area or pad 52 beside the upper end pad 45 associated with the resistive track 44. The area 52 is connected to a conductive strip 53 integral therewith and extending substantially parallel to the resistive track 44 as far as a lower conductive area or pad 54. The connecting bridge 49 advantageously presses on the area or pad 54 so that the conductive area 52 is permanently connected to the conductive track 48 formed on the other face of the support element 41. A further contact member, similar to the members 50 and 51, is indicated 55 in Figures 1, 9 and 10 and is arranged in a manner such that its lower end is offset transversely relative to the strip 53 but can be brought into contact with the upper conductive area 52 when the fuel in the tank 2 reaches a predetermined minimum level. In this condition, the contact member 55 is substantially short-circuited by the terminal 51, through the conductive area 52, the strip 53, the conductive bridge 49, and the conductive track 48. This short-circuited condition can be utilized to switch on an optical indicator, in known manner.

In order to reduce wear of the lower end of the contact member 55, the portion of the face 43 of the support element 41 disposed below the conductive area 52 and adjacent the strip 53 is advantageously coated with a material less "hard" than the ceramic material which constitutes the support element.

The conductive area 52, the associated connection strip 53, and the lower area 54, as well as the anti-wear coating 56, are advantageously applied to the supporting substrate 41 by the thick-film technique. The area of anti-wear material 56 may, in particular, be formed by conductive or resistive material, care being taken, however, that this area 56 does not come into contact with the conductive areas 52 and 54 and the connection strip 53.

As an alternative to the use of a metal bridge 49 for interconnecting the resistive track 44 (and any area 52) and the conductive track 48, it is possible to form holes with metallized surfaces in the support element 41, or even tracks of conductive material which extend around the lower edge or the side edges of the support element 41, or to use soldered metal wires.

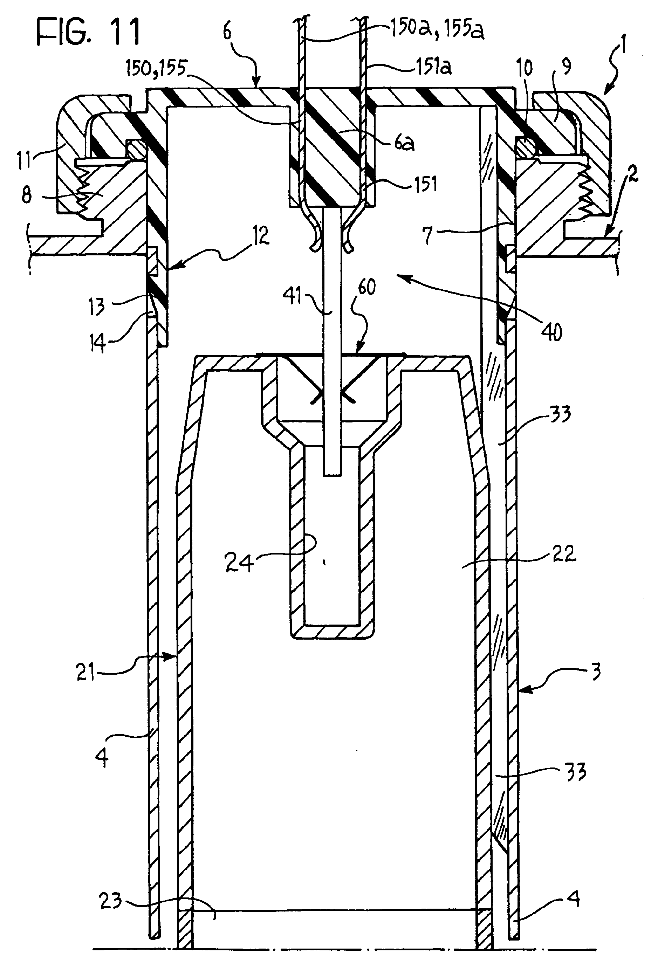

Figures 11 to 13 show a variant in which the position sensor 40 is formed differently from that described above. Parts and elements already described above have again been attributed the same reference numerals in Figures 11 to 13.

In the embodiment shown in these drawings, the position sensor 40 comprises a substantially rectangular plate-like support element 41 made, for example, of ceramic material. The support is fixed to a projection 6a which extends from the central portion of the upper closure element 6 towards the interior of the container 3. The upper recess 24 of the float 21 has a depth such that it can house the support element 41, even when the float is in the highest position envisaged for its operative travel.

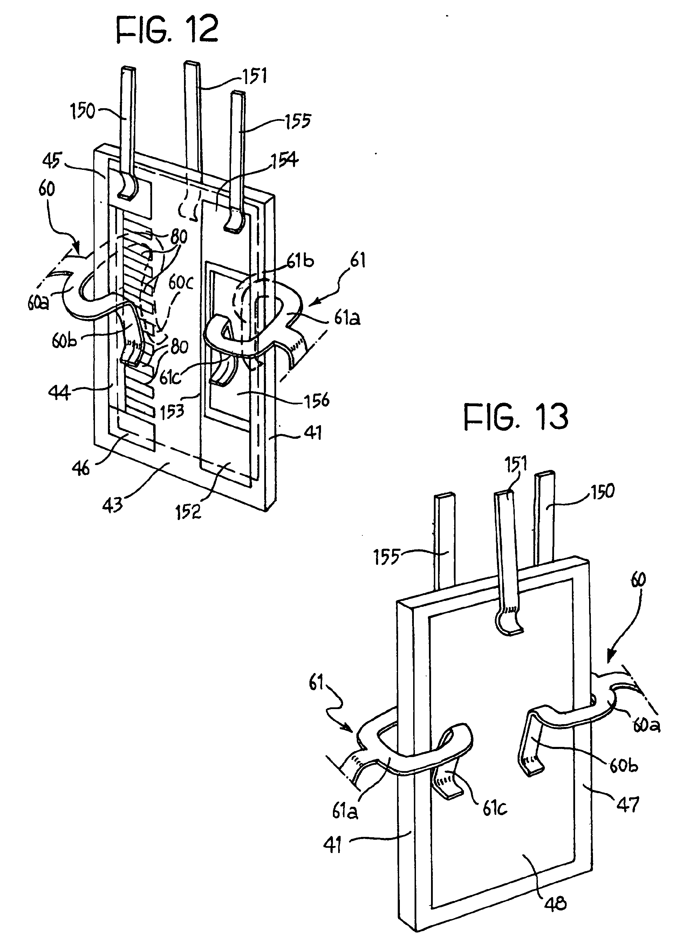

As can be seen in Figure 12 in particular, a first track 44 of resistive material, applied to a face 43 of the support element 41, extends between two end conductive areas or pads 45 and 46. A track of conductive material 48, which is preferably very wide, is formed on the other face 47 (Figure 13) of the support element 41.

Metal connection members 150 and 151 extend through the projection 6a of the upper closure element 6 (Figure 11), their lower ends extending from the projection and being permanently in contact, respectively, with the end conductive area 45 associated with the resistive track 44, and with the conductive track 48 (Figures 12 and 13). The upper ends of the connection members 150 and 151 project from the upper closure element 6, forming respective connection appendages, indicated 150a and 151a in Figure 11, for connection to a detection circuit of known type, not shown.

A first short-circuit member, indicated 60, is fixed to the upper end of the float 21 in the vicinity of the mouth of the recess 24. As can best be seen in Figures 12 and 13, this member has a substantially C-shaped portion, indicated 60a, the ends of which form sides or arms 60b and 60c which are disposed on opposite sides of the support element 41 and are resiliently loaded so as to contact, respectively, the portion of the face 43 in which the row of intermediate terminals or contacts 80 of the resistive track 44 extend, and the conductive track 48.

In operation, the position of the float 21 relative to the container 3 varies with variations in the fuel level in the tank 2 and the position of the short-circuit member 60 relative to the support element 41 which, however, is stationary, thus varies. The electrical resistance which can be measured between the terminals 150a and 151a consequently varies with variations in the fuel level.

In order to be able to provide an indication when the fuel level falls below a predetermined minimum level, a further conductive area or pad, indicated 152 (Figure 12), is advantageously but not necessarily deposited in the lower portion of the face 43 of the support element 41, beside the end area 46. This area 152 is connected, on one side, by means of a conductive strip 153, to a conductive area 154 deposited in the upper portion of the same face of the support element 41.

A further conductive connection element 155 extends through the projection 6a of the upper closure element 6, its lower end extending from the projection and being permanently in contact with the conductive area 154 (Figure 12). The upper end of the connection member 155 also projects from the upper face of the closure element 6 for connection to a circuit, not shown.

A further short-circuit element, indicated 61 in Figures 12 and 13, is fixed to the upper end of the float 21 in the vicinity of the cavity or recess 24, on the opposite side to the short- circuit element 60. This short-circuit element 61 also has a C-shaped portion, indicated 61a, the ends of which form downwardly-bent arms 61b and 61c, spring-loaded against the two opposed main faces of the support element 41. In particular, the arm 61b is permanently in contact with the conductive track 48 deposited on the face 47 of the support element 41 and the arm 61c slides on the face 43 of this support element, along a path which can intersect the lower conductive area 152 when the fuel level in the tank 2 falls below a predetermined minimum level. In this condition, the connection members 151 and 155 are short-circuited to one another through the conductive track 48, the short-circuit element 61, the conductive area 152, the connection strip 153, and the conductive area 154. This short-circuit condition can be used, in known manner, for example, to switch on an optical indicator.

A layer 156 of material suitable for reducing wear due to sliding of the arm 61c of the short-circuit member 61 is advantageously deposited on the portion of the face 43 of the support element 41 disposed between the conductive areas 152 and 154.

In the embodiment of Figures 11 to 13, the conductive areas and the resistive tracks applied to the support element 41 can also be formed and deposited by the thick-film technique.

The tubular element 4 of the container 3 may be formed by a drawn metal section, preferably of aluminium or an alloy thereof, or may be constituted by a section of tube made of plastics material, preferably formed by extrusion.

The float 21 may also be made of moulded plastics material in two half-shells, coupled as shown in the drawings, possibly with the interposition of an intermediate cylindrical portion which may be made of extruded plastics material or of drawn metal, also aluminium or an alloy thereof, in this case.

The level indicator according to the invention has a structure such that level indicators of different lengths can quite easily be produced for fitting in tanks of correspondingly different depths. For this purpose, it is in fact necessary simply to provide tubular elements 4 of the required different lengths and corresponding intermediate tubular portions for the float 21.

## Claims

1. A fuel-level indicator for a vehicle tank (2), comprising:
a substantially cylindrical container (3) for mounting in the tank (2), the container (3) having a lower opening (20) for putting its interior into fluid communication with the interior of the tank (2),
a float (21) mounted so as to be movable in the container (3) in a manner such that its relative position varies with variations of the fuel level in the container (3) in use,
resilient means (30) interposed between the container (3) and the float (21) and tending to keep the float in a predetermined reference position, and
sensor means (40) for the generation of a first electrical signal indicative of the instantaneous position of the float (21) relative to the container (3) and of a second signal when the float (21) falls below a relative position corresponding to a predetermined minimum fuel level in the tank (2),
the indicator being **characterized in that** the sensor means (40) comprise:
a single plate-like support element (41) of electrically insulating material carrying a track (44) of resistive material and a track (48) of conductive material which extend along an axis substantially parallel to the axis of movement of the float (21), and a conductive reference element (52; 152) which is connected permanently to the conductive track (48) and the position of which along the axis is determined on the basis of the predetermined minimum fuel level, and
a plurality of contact members (50, 51, 55; 60, 61) for sliding cooperation with the resistive track (44) and the conductive track (48) and with the conductive reference element (52; 152),
the support element (41) and the plurality of contact members (50, 51, 55; 60, 61) being connected permanently to the upper end of the float (21) and to the upper portion of the container (3), respectively, or vice versa, so that a movement of the float (21) relative to the container (3) can bring about a corresponding relative movement between the support element (41) and the associated contact members (50, 51, 55; 60, 61).

2. A level indicator according to Claim 1, **characterized in that**
said support element (41) is electrically-insulating and is fixed to the upper end of the float (21) so as to extend parallel to the axis of the container (3), the support element (41) carrying, on a first face (43), said track (44) of resistive material, and on the second face, opposite the first, said track (48) of conductive material,
and **in that** the sensor means (40) comprise:
connection means (49) provided for keeping the lower ends of said tracks (44, 48) permanently connected, and
at least a first contact member (50) and a second contact member (51) which are fixed to the upper end (6) of the container (3) and project into the container, cooperating by sliding contact with the resistive track (44) and with the conductive track (48) of the support element (41), respectively, so that, when the position of the float (21) varies relative to the container (3), the electrical resistance which can be measured between the first and second contact members (50, 51) varies.

3. A level indicator according to Claim 2, **characterized in that**, in the upper portion of one face (43) of the support element (41), there is an area (52) of conductive material which is permanently connected to the conductive track (48) and which is intended to be engaged by an associated third contact member (55) fixed to the upper end (6) of the container (3) when the float (2) falls below a relative position corresponding to the predetermined minimum fuel level in the tank (2).

4. A level indicator according to Claim 3, **characterized in that** the area of conductive material (52) is applied to the same face (43) of the support element (41) to which the track (44) of resistive material is applied, the area (52) being integral with a strip (53) of conductive material which extends beside and spaced from portion of the surface of the support (41) on which the third contact member (55) slides in operation, the lower portion of the strip (53) being permanently connected to the lower end of one of said tracks (44; 48).

5. A level indicator according to any one of Claims 2 to 4, **characterized in that** the lower ends of the tracks (44, 48) are connected to one another, and possibly to the lower end (54) of the strip (53), by means of a U-shaped metal bridge (49) press- fitted resiliently with interference on the lower end of the support element (41).

6. A level indicator according to any one of Claims 2 to 4, **characterized in that** the lower ends of the tracks (44, 48) are interconnected by means of at least one metallized hole in the support element (41).

7. A level indicator according to any one of Claims 2 to 4, **characterized in that** the lower ends of the tracks (44, 48) are interconnected by means of a soldered metal wire.

8. A level indicator according to Claim 1, **characterized in that** said support element is electrically insulating and is fixed to the upper end (6) of the container (3) and extends into the latter and parallel to the axis thereof, the support element (41) carrying, on a first face (43), said track (44) of resistive material and, on the second face (47) opposite the first, said track (48) of conductive material, and **in that** the sensor means (40) comprise:
at least a first short-circuit member (60) which is fixed to the float (21) and forms a first and a second contact member or arm (60b, 60c) opposite one another and engaging said resistive track (44) and said conductive track (48) of the support element (41), respectively, with sliding contact so that, when the relative position of the float (21) varies, the electrical resistance which can be measured between the upper ends of said tracks (44; 48) varies.

9. A level indicator according to Claim 8, **characterized in that**, in the lower portion of the first face (43) of the support element (41), there is an area (152) of electrically conductive material connected to a conductive connection member (155) accessible from outside the container (3), a second short-circuit member (61) being fixed to the float (21) and forming a third contact member or arm (61b) which slidingly engages the conductive track (48) and a fourth contact member or arm (61c) which slidingly engages the first face (43) of the support element (41) and can contact the area (152) of conductive material when the float (21) falls below a relative position corresponding to the predetermined minimum fuel level in the tank (2).

10. A level indicator according to any one of Claims 1 to 9, **characterized in that** the support element (41) is made of ceramic material.

## Patentansprüche

1. Kraftstoffniveauanzeigevorrichtung für einen Fahrzeugtank (2), mit:
einem im Wesentlichen zylindrischen Behälter (3) zur Montage in dem Tank (2), wobei der Behälter (3) eine untere Öffnung (20) hat, um sein Inneres in Fluidverbindung mit dem Inneren des Tanks (2) zu setzen,
einem Schwimmer (21), der so montiert ist, um in dem Container (3) in einer solchen Art und Weise bewegbar zu sein, dass sich seine relative Position mit Veränderungen des Kraftstoffniveaus in dem Behälter (3) im Gebrauch verändert,
einer elastischen Einrichtung (30), die zwischen dem Container (3) und dem Schwimmer (21) liegt und dazu neigt, den Schwimmer in einer vorbestimmten Referenzposition zu halten, und
einer Sensoreinrichtung (40) zum Erzeugen eines ersten elektrischen Signals, das die momentane Position des Schwimmers (21) relativ zu dem Behälter (3) anzeigt, und eines zweiten Signals, wenn der Schwimmer (21) unter eine relative Position fällt, die einem vorbestimmten Minimumkraftstoffniveau in dem Tank (2) entspricht,
wobei die Anzeigevorrichtung **dadurch gekennzeichnet ist, dass** die Sensoreinrichtung (40) folgendes aufweist:
ein einzelnes plattenförmiges Stützelement (41) aus elektrisch isolierendem Material, das eine Bahn (44) eines Widerstandsmaterials und eine Bahn (48) eines leitenden Materials trägt, die sich entlang einer Achse im Wesentlichen parallel zu der Achse einer Bewegung des Schwimmers (21) erstreckt, und ein leitendes Referenzelement (52; 152), das permanent mit der leitenden Bahn (48) verbunden ist und dessen Position entlang der Achse auf der Basis des vorbestimmten Minimumkraftstoffniveaus bestimmt ist, und
eine Vielzahl von Kontaktbauteilen (50, 51, 55; 60, 61) zum gleitenden Zusammenspiel mit der Widerstandsbahn (44) und der leitenden Bahn (48) und mit dem leitenden Referenzelement (52; 152), wobei das Stützelement (41) und die Vielzahl von Kontaktbauteilen (50, 51, 55; 60, 61) permanent mit dem oberen Ende des Schwimmers (51) bzw. mit dem oberen Abschnitt des Behälters (3) oder andersherum verbunden sind, so dass eine Bewegung des Schwimmers (21) relativ zu dem Behälter (3) eine entsprechende relative Bewegung zwischen dem Stützelement (41) und den angeschlossenen Kontaktbauteilen (50, 51, 55; 60, 61) bewirken kann.

2. Niveauanzeigevorrichtung nach Anspruch 1, **dadurch gekennzeichnet, dass**
das Stützelement (41) elektrisch isolierend ist und an dem oberen Ende des Schwimmers (21) befestigt ist, um sich parallel zu der Achse des Containers (3) zu erstrecken, wobei das Stützelement (41) an einer ersten Fläche (43) die Bahn (44) aus Widerstandsmaterial und an der zweiten Fläche, entgegengesetzt zu der ersten, die Bahn (48) aus leitendem Material trägt,
und dadurch, dass die Sensoreinrichtung (40) folgendes aufweist:
eine Verbindungseinrichtung (49), die vorgesehen ist, um die unteren Enden der Bahnen (44, 48) permanent verbunden zu halten, und
wenigstens ein erstes Kontaktbauteil (50) und ein zweites Kontaktbauteil (51), die an dem oberen Ende (6) des Behälters (3) befestigt sind und in den Container ragen, wobei sie durch gleitenden Kontakt mit der Widerstandsbahn (44) bzw. mit der leitenden Bahn (48) des Stützelements (41) zusammenwirken, so dass dann, wenn die Position des Schwimmers (21) relativ zu dem Container (3) variiert, der elektrische Widerstand variiert, der zwischen dem ersten und dem zweiten Kontaktbauteil (50, 51) gemessen werden kann.

3. Niveauanzeigevorrichtung nach Anspruch 2, **dadurch gekennzeichnet, dass** es in dem oberen Abschnitt von einer Fläche (43) des Stützelements (41) einen Bereich (52) aus leitendem Material gibt, der permanent mit der leitenden Bahn (48) verbunden ist und der dafür vorgesehen ist, von einem angeschlossenen, an dem oberen Ende (6) des Containers (3) befestigten dritten Kontaktbauteil (55) in Eingriff gebracht zu werden, wenn der Schwimmer (2) unter eine relative Position fällt, die dem vorbestimmten Minimumkraftstoffniveau in dem Tank (2) entspricht.

4. Niveauanzeigevorrichtung nach Anspruch 3, **dadurch gekennzeichnet, dass** der Bereich aus leitendem Material (52) auf die gleiche Fläche (43) des Stützelements (41) aufgebracht ist, auf die die Bahn (44) aus Widerstandsmaterial aufgebracht ist, wobei der Bereich (52) einstückig mit einem Streifen (53) aus leitendem Material ist, der sich seitlich und beabstandet von einem Abschnitt der Oberfläche des Stützelements (41) erstreckt, auf dem das dritte Kontaktbauteil (55) im Betrieb gleitet, wobei der untere Abschnitt des Streifens (53) permanent mit dem unteren Ende von einer der Bahnen (44; 48) verbunden ist.

5. Niveauanzeigevorrichtung nach einem der Ansprüche 2 bis 4, **dadurch gekennzeichnet, dass** die unteren Enden der Bahnen (44, 48) miteinander und möglicherweise mit dem unteren Ende (54) des Streifens (53) mittels einer U-förmigen Metallbrücke (49) verbunden sind, die mit dem unteren Ende des Stützelements (41) dazwischen liegend elastisch presspassend ist.

6. Niveauanzeigevorrichtung nach einem der Ansprüche 2 bis 4, **dadurch gekennzeichnet, dass** die unteren Enden der Bahnen (44, 48) mittels wenigstens einem metallbedampften Loch in dem Stützelement (41) verbunden sind.

7. Niveauanzeigevorrichtung nach einem der Ansprüche 2 bis 4, **dadurch gekennzeichnet, dass** die unteren Enden der Bahnen (44, 48) mittels einem gelöteten Metalldraht verbunden sind.

8. Niveauanzeigevorrichtung nach Anspruch 1, **dadurch gekennzeichnet, dass** das Stützelement elektrisch leitend ist und an dem oberen Ende (6) des Containers (3) befestigt ist und sich in dem Letzteren und parallel zu dessen Achse erstreckt, wobei das Stützelement (41) auf einer ersten Fläche (43) die Bahn (44) aus Widerstandsmaterial und auf der zweiten Fläche (47), entgegengesetzt zu der ersten, die Bahn (48) aus leitendem Material trägt, und dadurch, dass die Sensoreinrichtung (40) folgendes aufweist:
wenigstens ein ersten Kurzschlussbauteil (60), das an dem Schwimmer (21) befestigt ist und ein erstes und ein zweites Kontaktbauteil oder -arm (60b, 60c) ausbildet, die einander gegenüberliegen und mit der Widerstandsbahn (44) bzw. der leitenden Bahn (48) des Stützelements (41) mit einem gleitenden Kontakt in Eingriff stehen, so dass dann, wenn die relative Position des Schwimmers (21) variiert, der elektrische Widerstand variiert, der zwischen den oberen Enden der Bahnen (44; 48) gemessen werden kann.

9. Niveauanzeigevorrichtung nach Anspruch 8, **dadurch gekennzeichnet, dass** in dem unteren Abschnitt der ersten Fläche (43) des Stützelements (41) ein Bereich (152) aus elektrisch leitendem Material vorliegt, der mit einem leitenden Verbindungsbauteil (155) verbunden ist, das von außerhalb des Containers (3) zugänglich ist, wobei ein zweites Kurzschlussbauteil (61) an dem Schwimmer (21) befestigt ist und ein drittes Kontaktbauteil oder -arm (61b), der mit der leitenden Bahn (48) gleitend in Eingriff steht, und ein viertes Kontaktbauteil oder -arm (61c) ausbildet, das mit der ersten Fläche (43) des Stützelements (41) gleitend in Eingriff steht und den Bereich (152) des leitenden Materials berühren kann, wenn der Schwimmer (21) unter eine relative Position fällt, die dem vorbestimmten Minimumkraftstoffniveau in dem Tank (2) entspricht.

10. Niveauanzeigevorrichtung nach einem der Ansprüche 1 bis 9, **dadurch gekennzeichnet, dass** das Stützelement (41) aus keramischen Material hergestellt ist.

## Revendications

1. Indicateur de niveau de carburant pour un réservoir de véhicule (2), comprenant :
un récipient sensiblement cylindrique (3) devant être monté dans le réservoir (2), le récipient (3) ayant une ouverture inférieure (20) destinée à laisser passer un fluide entre son intérieur et l'intérieur du réservoir (2),
un flotteur (21) monté de manière à être mobile dans le récipient (3) de telle façon que sa position relative varie en fonction des variations du niveau de carburant dans le récipient (3) pendant l'utilisation,
un moyen élastique (30) intercalé entre le récipient (3) et le flotteur (21) et tendant à maintenir le flotteur dans une position prédéterminée de référence, et
un moyen formant capteur (40) destiné à générer un premier signal électrique représentatif de la position instantanée du flotteur (21) par rapport au récipient (3) et
un deuxième signal lorsque le flotteur (21) tombe en dessous d'une position relative correspondant à un niveau minimum prédéterminé de carburant dans le réservoir (2),
l'indicateur étant **caractérisé en ce que** le moyen formant capteur (40) comprend :
un élément formant support en forme de plaque unique (41) constitué d'un matériau électriquement isolant supportant un rail (44) constitué d'un matériau résistif et un rail (48) constitué d'un matériau conducteur qui s'étendent le long d'un axe sensiblement parallèle à l'axe de mouvement du flotteur (21), et un élément de référence conducteur (52 ; 152) qui est connecté en permanence au rail conducteur (48) et dont la position le long de l'axe est déterminée sur la base du niveau minimum prédéterminé de carburant, et
une pluralité d'éléments de contact (50, 51, 55 ; 60, 61) destinée à coopérer de manière glissante avec le rail résistif (44) et le rail conducteur (48) et avec l'élément de référence conducteur (52 ; 152),
l'élément formant support (41) et la pluralité d'éléments de contact (50, 51, 55 ; 60, 61) étant connectés en permanence à l'extrémité supérieure du flotteur (21) et à la portion supérieure du récipient (3), respectivement ou vice versa, afin qu'un mouvement du flotteur (21) par rapport au récipient (3) puisse provoquer un mouvement relatif correspondant entre l'élément formant support (41) et les éléments de contact (50, 51, 55 ; 60, 61) associés.

2. Indicateur de niveau selon la revendication 1, **caractérisé en ce que**
ledit élément formant support (41) est électriquement isolant et est fixé à l'extrémité supérieure du flotteur (21) de sorte qu'il s'étende parallèlement à l'axe du récipient (3), l'élément formant support (41) supportant, sur une première face (43), ledit rail (44) constitué d'un matériau résistif et, sur une deuxième face se trouvant à l'opposé de la première face, ledit rail (48) constitué d'un matériau conducteur,
et **en ce que** le moyen formant capteur (40) comprend :
un moyen de connexion (49) prévu pour maintenir les extrémités inférieures desdits rails (44, 48) connectées en permanence, et
au moins un premier élément de contact (50) et un deuxième élément de contact (51) qui sont fixés sur l'extrémité supérieure (6) du récipient (3) et font saillie dans le récipient, coopérant par contact glissant avec le rail résistif (44) et avec le rail conducteur (48) de l'élément formant support (41), respectivement, afin que,
lorsque la position du flotteur (21) varie par rapport au récipient (3), la résistance électrique qui peut être mesurée entre les premier et deuxième éléments de contact (50, 51) varie.

3. Indicateur de niveau selon la revendication 2, **caractérisé en ce que**, dans la portion supérieure d'une face (43) de l'élément formant support (41), se trouve une région (52) de matériau conducteur qui est connectée en permanence au rail conducteur (48) et qui est destinée à s'accoupler à un troisième élément de contact (55) associé fixé sur l'extrémité supérieure (6) du récipient (3) lorsque le flotteur (21) tombe en dessous d'une position relative correspondant au niveau minimum prédéterminé de carburant dans le réservoir (2).

4. Indicateur de niveau selon la revendication 3, **caractérisé en ce que** la région de matériau conducteur (52) est appliquée sur la même face (43) de l'élément formant support (41) où le rail (44) de matériau résistif est appliqué, la région (52) faisant partie intégrante d'une bande (53) de matériau conducteur qui s'étend à côté et à distance d'une portion de la surface du support (41) sur laquelle le troisième élément de contact (55) glisse pendant le fonctionnement, la portion inférieure de la bande (53) étant connectée en permanence à l'extrémité inférieure de l'un desdits rails (44 ; 48).

5. Indicateur de niveau selon l'une quelconque des revendications 2 à 4, **caractérisé en ce que** les extrémités inférieures des rails (44, 48) sont connectées l'une à l'autre, et éventuellement à l'extrémité inférieure (54) de la bande (53), au moyen d'un pont métallique en U (49) ajusté serré de manière élastique en interférant avec l'extrémité inférieure de l'élément formant support (41).

6. Indicateur de niveau selon l'une quelconque des revendications 2 à 4, **caractérisé en ce que** les extrémités inférieures des rails (44, 48) sont interconnectées au moyen d'au moins un trou métallisé dans l'élément formant support (41).

7. Indicateur de niveau selon l'une quelconque des revendications 2 à 4, **caractérisé en ce que** les extrémités inférieures des rails (44, 48) sont interconnectées au moyen d'un fil de métal brasé.

8. Indicateur de niveau selon la revendication 1, **caractérisé en ce que** ledit élément formant support (41) est électriquement isolant et est fixé à l'extrémité supérieure (6) du récipient (3) et s'étend dans ce dernier et parallèlement à son axe, l'élément formant support (41) supportant, sur une première face (43), ledit rail (44) constitué d'un matériau résistif et, sur une deuxième face (47) se trouvant à l'opposé de la première face, ledit rail (48) constitué d'un matériau conducteur, et **en ce que** le moyen formant capteur (40) comprend :
au moins un premier élément de court-circuit (60) qui est fixé sur le flotteur (21) et forme un premier et un deuxième éléments de contact ou bras (60b, 60c) à l'opposé l'un de l'autre et coopérant, respectivement, avec ledit rail résistif (44) et avec ledit rail conducteur (48) de l'élément formant support (41) par contact glissant de sorte que, lorsque la position relative du flotteur (21) varie, la résistance électrique qui peut être mesurée entre les extrémités supérieures desdits rails (44 ; 48) varie.

9. Indicateur de niveau selon la revendication 8, **caractérisé en ce que**, dans la portion inférieure de la première face (43) de l'élément formant support (41), il y a une région (152) de matériau conducteur connectée à un élément de connexion conducteur (155) accessible depuis l'extérieur du récipient (3), un deuxième élément de court-circuit (61) étant fixé sur le flotteur (21) et formant un troisième élément de contact ou bras (61b) qui coopère de manière glissante avec le rail conducteur (48) et un quatrième élément de contact ou bras (61c) qui coopère de manière glissante avec la première face (43) de l'élément formant support (41) et peut entrer en contact avec la région (152) de matériau conducteur lorsque le flotteur (21) tombe en dessous d'une position relative correspondant au niveau minimum prédéterminé de carburant dans le réservoir (2).

10. Indicateur de niveau selon l'une quelconque des revendications 1 à 9, **caractérisé en ce que** l'élément formant support (41) est constitué d'un matériau céramique.
